# FASCICULE DE BREVET EUROPEEN

(11) **EP 1 143 639 B1**
(45) Date de publication et mention de la délivrance du brevet: **01.08.2007**
(21) Numéro de dépôt: 01400744.7
(22) Date de dépôt: 22.03.2001
(51) Int. Cl.: H04B 7/26

(54) **Procédé d'ajustement des instants d'émission dans un système de radiocommunications mobiles**
Übertragungszeitsteuerungsverfahren in einem mobilen Funkkommunikationssystem
Transmission timing adjustment method in a mobile radiocommunications system

(30) Priorité: 07.04.2000 FR 0004458
(43) Date de publication de la demande: 10.10.2001
(73) Titulaire: Alcatel Lucent, 75008 Paris (FR)
(72) Inventeur: Agin, Pascal, 94370 Sucy en Brie (FR)
(74) Mandataire: El Manouni, Josiane

(56) Documents cités:
- EP-A- 0 589 753
- EP-A- 0 957 592
- US-A- 5 446 727
- US-A- 5 668 804

## Description

La présente invention concerne d'une manière générale les systèmes de radiocommunications mobiles, notamment les systèmes dits à accès multiple à répartition par les codes, ou AMRC, ou encore CDMA (pour "Code Division Multiple Access" en anglais).

D'une manière générale, dans ces systèmes, un des objectifs est d'augmenter les performances, c'est-à-dire notamment augmenter la capacité et/ou améliorer la qualité de service.

Une technique couramment utilisée est la technique de contrôle de puissance, et notamment la technique dite de contrôle de puissance en boucle fermée (ou "closed loop power control" en anglais).

Le but du contrôle de puissance en boucle fermée est généralement de maintenir, pour une liaison entre une station de base et une station mobile, le rapport signal-sur-interférence (ou SIR, pour "Signal-to-Interference Ratio" en anglais) le plus proche possible d'une valeur SIR cible (ou "target SIR" en anglais). Par exemple, dans le sens descendant (c'est-à-dire des stations de base vers les stations mobiles), une station mobile transmet à une station de base des commandes de contrôle de puissance destinées à réduire l'écart entre le SIR estimé par la station mobile et la valeur SIR cible. La valeur SIR cible peut elle-même être déterminée par une autre boucle de contrôle permettant de maintenir la qualité de service constante, cette deuxième boucle étant généralement dite boucle externe (ou "outer loop" en anglais), par opposition à la précédente, dite aussi boucle interne (ou "inner loop" en anglais).

D'une manière générale, pour obtenir de meilleures performances, le temps de réaction de la boucle interne de contrôle de puissance, ou délai séparant l'émission d'un signal par la station de base, de l'application par cette station de base d'une commande correspondante de contrôle de puissance, a intérêt à être le plus court possible.

Dans les systèmes tels que par exemple le système UMTS (pour « Universal Mobile Telecommunication System » en anglais), où les informations transmises sont structurées en trames, elles-mêmes structurées en intervalles de temps (ou « time-slots » en anglais) une commande de contrôle de puissance est en général transmise dans chaque intervalle de temps, cette commande étant en général obtenue à partir du signal reçu pendant l'intervalle de temps précédent, et étant en général appliquée au signal émis pendant l'intervalle de temps suivant.

En théorie, ce schéma de transmission permet ainsi de définir un temps de réaction nominal pour cette boucle interne de contrôle de puissance. En pratique, du fait que les horloges utilisées dans les stations de base et dans les stations mobiles pour définir cette structure temporelle ne sont pas stables, et du fait des déplacements des stations mobiles, ce temps de réaction peut devenir supérieur à ce temps de réaction nominal, et les performances risquent alors d'être dégradées. Il est alors nécessaire de prévoir des ajustements pour éviter ces dégradations de performances. En outre, la stabilité des horloges et la vitesse de la station mobile ne sont que des exemples et d'autres causes d'ajustement sont possibles; par exemple le fait que l'horloge de la station mobile et l'horloge de la station de base peuvent ne pas avoir exactement la même fréquence, même si ces horloges sont très stables.

Pour déterminer les ajustements à effectuer, on peut se placer par exemple dans la station mobile et observer l'écart entre instants de réception et instants d'émission par cette station mobile. Si cet écart devient sensiblement différent d'un écart nominal T0, un ajustement doit être effectué.

Par ailleurs, une autre technique couramment utilisée dans ces systèmes, plus particulièrement dans les systèmes CDMA, est la technique dite de "soft handover" (en anglais), selon laquelle une station mobile est simultanément en relation avec plusieurs stations de base, ce qui permet, grâce à des techniques appropriées de traitement et de combinaison des différents signaux reçus de ces différentes stations de base par la station mobile (notamment au moyen d'un récepteur de type "Rake") d'améliorer les performances en réception.

Pour le système UMTS par exemple, le document 3G TS 25.214 V3.1.1 publié par le 3GPP ("3^{rd} Generation Partnership Project") prévoit alors que l'écart entre instants de réception et instants d'émission par la station mobile doit rester dans les limites de T0±ΔT0, où T0 correspond à un écart nominal, et T0±ΔT0 correspond à une fenêtre de réception autour de T0. Par exemple, dans ce document, ΔT0 est égal à 148 "chips" (le terme "chip" désignant, dans les systèmes CDMA, la période de transmission élémentaire après étalement de spectre du signal à transmettre).

Pour éviter que, pour au moins une des différentes stations de base avec lesquelles la station mobile est en relation, les instants de réception par la station mobile ne tombent en dehors de cette fenêtre de réception, un ajustement doit également être prévu. Sinon les performances en réception risquent d'être dégradées, et la liaison correspondante risque d'être abandonnée.

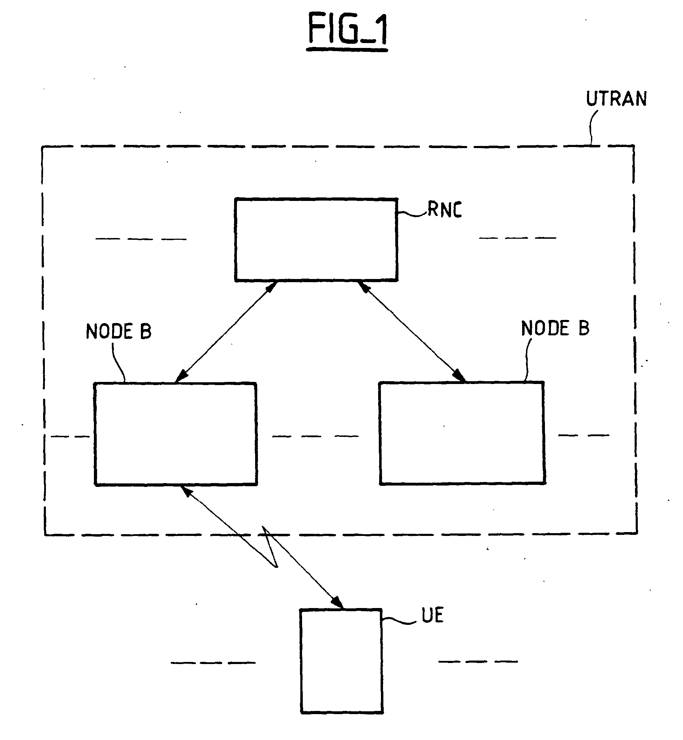

Les différents buts de ces ajustements étant ainsi fixés, un problème est de trouver une réalisation optimale, compte tenu des deux types d'équipements concernés, à savoir d'une part les stations mobiles (aussi appelées UE, pour "User Equipment" dans le système UMTS), et d'autre part les stations de base (aussi appelées « Node B » dans le système UMTS), ou plus généralement l'ensemble formé par les stations de base et par les équipements qui les contrôlent (ces équipements étant aussi appelés RNC, pour « Radio Network Controller » dans le système UMTS), cet ensemble étant aussi appelé UTRAN, pour "UMTS Terrestrial Radio Access Network", dans le système UMTS. L'architecture générale d'un tel système est rappelée sur la figure 1.

Ainsi, dans la version actuelle du document précité, ou version 3G TS 25.214 V3.1.1 (1999-12), il est prévu que l'UE soit toujours autorisé à effectuer des ajustements de ses instants d'émission, c'est-à-dire même aussi dans le cas où il est en situation de "soft handover" avec des stations de base n'ayant pas la même référence temporelle (cas dit de "soft handover normal"). Il est aussi prévu que si l'écart entre instants de réception et instants d'émission par l'UE est en dehors des limites fixées, l'UE peut en informer l'UTRAN, qui peut alors effectuer des ajustements de ses instants d'émission.

Dans une version précédente de ce document, il était au contraire prévu que l'UE ne soit autorisé à effectuer des ajustements de ses instants d'émission, que dans les cas où il n'est pas en situation de "soft handover normal".

Les raisons du changement ainsi introduit dans ce document sont exposées dans le document TSG-RAN Working Group 1 meeting #9- TSGR1#9(99) j76 - Dresden, Germany. Une première raison indiquée, pour laquelle l'UE doit toujours être autorisé à effectuer des ajustements de ses instants d'émission est que, sinon, cela peut conduire, dans le cas de "soft handover normal", à abandonner une liaison qui est en fait la liaison de meilleure qualité, alors que, si l'UE est autorisé à effectuer des changements de ses instants d'émission, il peut effectuer de tels changements de manière à conserver la liaison de meilleure qualité, et à en abandonner une autre, de moins bonne qualité. Une deuxième raison indiquée est que, l'horloge de l'UE étant en général beaucoup moins stable que celle du réseau, cela permet à l'UE d'effectuer autant de changements que nécessaire pour aligner son horloge sur celle du réseau, et d'éviter, en situation de "soft handover normal", de demander au réseau d'effectuer plus d'ajustements que nécessaire, et donc de consommer plus de ressources de signalisation que nécessaire.

Ainsi que l'a observé le demandeur, cette version actuelle a cependant des inconvénients. Notamment, dans le cas de "soft handover normal", la station mobile risque ainsi de modifier ses instants d'émission dans un sens contraire à celui choisi par le réseau pour modifier ses propres instants d'émission, ce qui n'est pas du tout souhaitable et risque même d'entraîner un effet contraire à celui recherché avec ces ajustements. En outre, ce risque est accru par le fait que les algorithmes d'ajustement mis en oeuvre dans l'UTRAN ne sont pas normalisés, et donc ne sont pas a priori connus des stations mobiles. En d'autres termes cette solution a essentiellement pour inconvénient un manque de coordination entre UE et UTRAN.

La version précédente ne présentait pas cet inconvénient. En revanche, et ainsi que l'a également observé le demandeur, elle présentait un autre inconvénient, qui est que l'UE n'était jamais autorisé à effectuer des ajustements de ses instants d'émission dans le cas de "soft handover normal", alors que dans certains cas cela pourrait être utile qu'il soit autorisé à le faire (notamment suivant le type d'algorithme d'ajustement mis en oeuvre dans l'UTRAN) ou de même l'UE était toujours autorisé à effectuer de tels ajustements en dehors du cas de "soft handover normal", alors que dans certains cas (notamment suivant le type d'algorithme d'ajustement mis en oeuvre dans l'UTRAN) cela pourrait être utile qu'il ne soit pas autorisé à le faire. En d'autres termes cette solution a essentiellement pour inconvénient un manque de souplesse.

En outre, et ainsi que l'a également observé le demandeur, ces deux solutions ont également pour inconvénient de manquer de souplesse ou de ne pas être suffisamment performantes pour une autre raison, qui est que dans les cas où l'UE est autorisé à effectuer des ajustements, il les effectue toujours de la même manière, à savoir d'une manière prédéterminée, et non d'une manière qui pourrait être adaptée à chaque cas (notamment en fonction du type d'algorithme d'ajustement mis en oeuvre dans l'UTRAN).

La présente invention a notamment pour but d'éviter ces inconvénients.

Le document US-A- 5 446 727 décrit un procédé d'alignement temporel dans un système de radiocommunications mobiles CDMA, le but étant de maintenir une orthogonalité des différents canaux de trafic (ou codes d'étalement), transmis dans le sens montant, des différentes stations mobiles vers le réseau.

Les documents US-A- 5 668 804 et EP-A-0 589 753 décrivent un procédé d'alignement temporel dans un système de radiocommunications mobiles TDMA, le but étant de compenser le délai de transmission dû à la distance entre stations mobiles et stations de base, afin que le signal transmis par une station mobile soit bien reçu par la station de base dans l'intervalle de temps TDMA qui a été alloué à cette station mobile.

Un des objets de la présente invention est un procédé d'ajustement des instants d'émission sur l'interface radio entre réseau et stations mobiles dans un système de radiocommunications mobiles, ce procédé étant essentiellement caractérisé en ce qu'il comporte un contrôle, par le réseau, des ajustements effectués par les stations mobiles.

Suivant une autre caractéristique, ledit contrôle comporte une commande d'activation ou de désactivation desdits ajustements.

Suivant une autre caractéristique, ledit contrôle comporte une commande d'amplitude maximale pour lesdits ajustements.

Suivant une autre caractéristique, ledit contrôle comporte une commande de fréquence maximale desdits ajustements.

Suivant une autre caractéristique, ledit contrôle comporte une commande d'amplitude maximale et une commande de fréquence maximale desdits ajustements.

Suivant une autre caractéristique, ladite commande d'amplitude maximale desdits ajustements inclut une amplitude nulle correspondant à une désactivation desdits ajustements.

Suivant une autre caractéristique, ledit contrôle est obtenu par diffusion d'informations de contrôle sur un canal de signalisation commun.

Suivant une autre caractéristique, ledit contrôle est obtenu par transmission d'informations de contrôle sur un canal de signalisation dédié.

Suivant une autre caractéristique, lesdites informations de contrôle sont transmises sur un canal de signalisation dédié dans un message de « soft handover ».

Suivant une autre caractéristique, lesdits ajustements sont effectués de manière à optimiser le temps de réaction d'une boucle interne de contrôle de puissance.

Un autre objet de la présente invention est un réseau de radiocommunications mobiles, ce réseau étant essentiellement caractérisé en ce qu'il comporte des moyens pour transmettre des informations de contrôle d'ajustement des instants d'émission par les stations mobiles.

Un autre objet de la présente invention est une station mobile, cette station mobile étant essentiellement caractérisée en ce qu'elle comporte des moyens pour contrôler les ajustements de ses instants d'émission, en fonction d'informations de contrôle reçues du réseau.

Un autre objet de la présente invention est un système de radiocommunications mobiles, ce système étant essentiellement caractérisé en ce qu'il comporte un réseau de radiocommunications mobiles comportant lui-même des moyens pour transmettre des informations de contrôle d'ajustement des instants d'émission par des stations mobiles, et des stations mobiles comportant elles-mêmes des moyens pour contrôler les ajustements de leurs instants d'émission, en fonction d'informations de contrôle reçues du réseau.

D'autres objets et caractéristiques de la présente invention apparaîtront à la lecture de la description suivante d'exemples de réalisation, faite en relation avec les dessins ci-annexés dans lesquels:
- la figure 1 est un schéma destiné à rappeler l'architecture générale d'un système de radiocommunications mobiles,
- la figure 2 est un schéma destiné à illustrer un exemple de moyens à prévoir dans une station mobile, pour mettre en oeuvre un procédé suivant l'invention,
- la figure 3 est un schéma destiné à illustrer un exemple de moyens à prévoir dans un réseau de radiocommunications mobiles, pour mettre en oeuvre un procédé suivant l'invention.

Des éléments identiques sur ces différentes figures ont été notés avec les mêmes références.

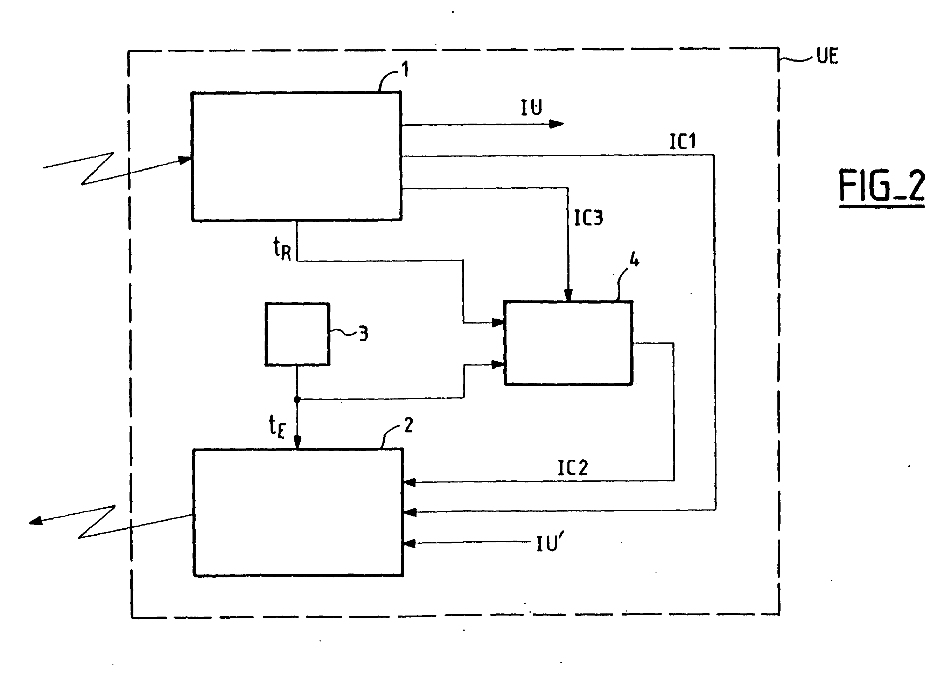

Sur la figure 2 est illustrée une station mobile (ou équipement utilisateur, UE) comportant, de manière connue:
- des moyens de réception 1 permettant de recevoir des informations utiles notées IU (de telles informations étant, dans le cas de « soft handover », et bien que non illustré spécifiquement, transmises simultanément par plusieurs liaisons descendantes ; dans l'exemple illustré, sont également inclus dans les moyens de réception 1, des moyens permettant, également de manière connue, de fournir des informations de commande de contrôle de puissance dans le sens descendant, notées IC1,
- des moyens d'émission 2 permettant de transmettre dans le sens montant des informations utiles notées IU', ainsi que lesdites informations IC1 de commande de contrôle de puissance.

Dans l'exemple illustré sur la figure 2, la station mobile UE comporte également des moyens d'ajustement 4 pour :
- observer la différence entre les instants de réception par la station mobile, notés t_{R} , fournis par les moyens de réception 1, et les instants d'émission par la station mobile, notés t_{E} , fournis par une horloge 3,
- déterminer si cette différence reste comprise dans un intervalle [T0-ΔT, T0+ΔT] prédéterminé,
- si cette différence ne reste pas comprise dans cet intervalle, effectuer un ajustement des instants d'émission de la station mobile, grâce à une commande correspondante de l'horloge 3, et/ou transmettre des informations de demande d'ajustement au réseau, notées IC2.

Suivant l'invention, les ajustements effectués par une station mobile sont contrôlés par le réseau. Ainsi, dans l'exemple illustré sur la figure 2, les moyens d'ajustement 4 sont contrôlés par des informations de contrôle des ajustements effectués par la station mobile, notées IC3, reçues du réseau et fournies par les moyens de réception 1.

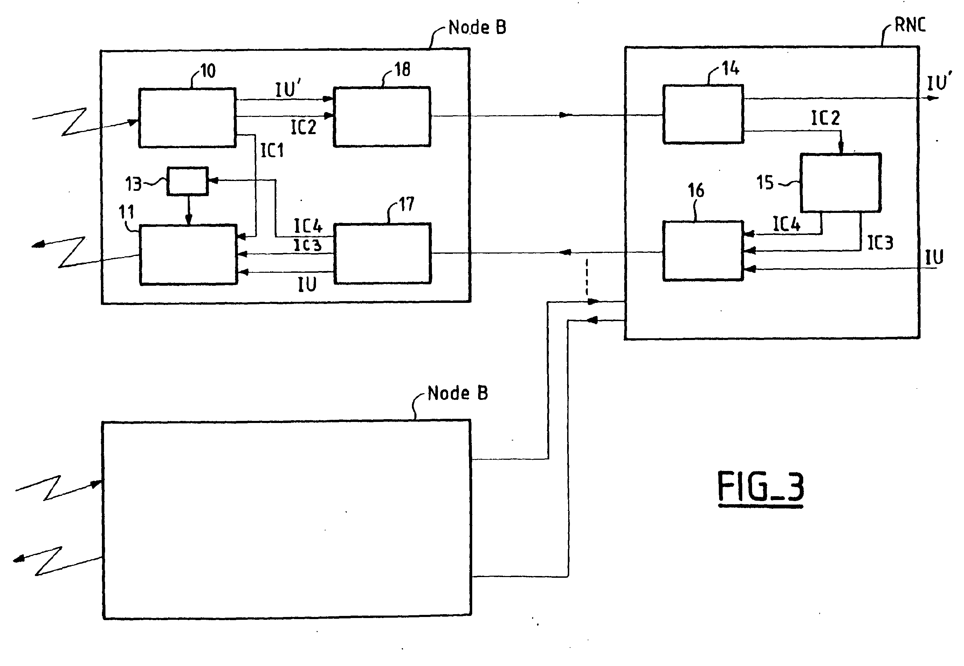

Sur la figure 3 est illustré un réseau de radiocommunications mobiles comportant un ensemble de stations de base (ou Node B) contrôlées par un contrôleur de stations de base (ou RNC). Pour simplifier, une seule station de base Node B et un seul contrôleur de stations de base RNC ont été détaillés.

Un Node B comporte, de manière connue, pour la réception/l'émission d'informations sur l'interface radio de/vers des stations mobiles:
- des moyens de réception 10 permettant de recevoir des informations utiles IU' d'une station mobile UE, ainsi que des informations IC1 de commande de contrôle de puissance et des informations IC2 de demande d'ajustement par cette station mobile,
- des moyens d'émission 11 permettant de transmettre à une station mobile des informations utiles IU, avec une puissance d'émission fonction desdites informations IC1 de commande de contrôle de puissance.

Dans l'exemple illustré sur la figure 3, un RNC comporte, de manière connue, pour la réception/l'émission d'informations de/vers un Node B:
- des moyens de réception 14 permettant de recevoir des informations utiles IU' d' un Node B, ainsi que des informations IC2 de demande d'ajustement par une station mobile UE,
- des moyens d'ajustement 15 permettant, à partir des informations de demande d'ajustement IC2 par une station mobile UE, de fournir des informations IC4 de commande d'ajustement à effectuer dans un Node B,
- des moyens d'émission 16 permettant de transmettre à un Node B des informations utiles IU, ainsi que lesdites informations IC4 de commande d'ajustement.

Dans l'exemple illustré sur la figure 3, un Node B comporte en outre, de manière connue, pour la réception/l'émission d'informations de/vers un RNC:
- des moyens de réception 17 permettant de recevoir des informations utiles IU d'un RNC, ainsi que des informations IC4 de commande d'ajustement transmises par ce RNC, ces informations IC4 représentant une commande d'ajustement correspondante appliquée à une horloge 13,
- des moyens d'émission 18 permettant de transmettre à un RNC des informations utiles IU', ainsi que des informations IC2 de demande d'ajustement.

Suivant l'invention, le réseau contrôle les ajustements effectués par les stations mobiles. Ainsi, dans l'exemple illustré sur la figure 3, des informations IC3 de contrôle des ajustements effectués par une station mobile UE sont fournies par les moyens d'ajustement 15 dans le RNC. Dans cet exemple, ces informations IC3 sont transmises à la station mobile UE via les moyens d'émission 16, puis les moyens de réception 17, et les moyens d'émission 11.

Les informations de contrôle des ajustements effectués par une station mobile peuvent comporter, par exemple:
- une commande d'activation ou de désactivation des ajustements effectués par la station mobile,
- une commande d'amplitude maximale et une commande de fréquence maximale pour les ajustements effectués par la station mobile; ces deux paramètres étant désignés par (x,y), la station mobile est ainsi autorisée à modifier ses instants d'émission dans la limite de « x » secondes toutes les « y » secondes (d'autres unités pouvant être utilisées, par exemple « y » pourrait être exprimé en nombre de trames),
- une commande d'amplitude maximale des ajustements effectués par la station mobile; dans ce cas seul le paramètre « x » est transmis, le paramètre « y » pouvant avoir une valeur prédéterminée,
- une commande de fréquence maximale des ajustements effectués par la station mobile; dans ce cas seul le paramètre « y » est transmis, le paramètre « x » pouvant avoir une valeur prédéterminée .

Il est à noter que dans le premier cas (commande d'activation ou de désactivation), un seul bit est nécesaire pour transmettre ces informations de contrôle, alors que dans les autres cas plusieurs bits sont nécessaires.

Il est également à noter que dans le cas où le paramètre « x » est transmis, il peut inclure une commande de désactivation des ajustements (correspondant à une valeur de « x » égale à zéro).

On comprendra qu'il n'est pas possible de décrire ici tous les cas de figure possibles pour le contrôle, par le réseau, des ajustements effectués par une station mobile. D'une manière générale, les ajustements effectués par une station mobile pourront être contrôlés notamment en fonction des ajustements demandés au réseau par cette station mobile et en fonction de l'algorithme mis en oeuvre dans le réseau pour effectuer ces ajustements, de manière à obtenir l'un et/ou l'autre des différents résultats mentionnés précédemment.

Par ailleurs, ces informations de contrôle des ajustements effectués par les stations mobiles peuvent ou non avoir une valeur propre à chaque station mobile.

Par exemple, ces informations peuvent être transmises à toutes les stations mobiles d'une même cellule par diffusion sur un canal de signalisation commun tel que le canal BCCH (« Broadcast Control CHannel »), avec d'autres paramètres système.

Elles peuvent aussi être transmises sur un canal de signalisation dédié. Un exemple intéressant est d'utiliser les messages de « soft handover », actuellement utilisés pour ajouter ou enlever une cellule à l'ensemble des cellules ou stations de base avec lesquelles la station mobile est en relation en situation de « soft handover » (cet ensemble étant aussi appelé « active set » en anglais). Par exemple, la station mobile peut, si cela est estimé utile par le réseau, être autorisée à désactiver ses ajustements lorqu'elle entre en situation de « soft handover », ou, toujours si cela est estimé utile par le réseau, à ré-activer ses ajustements lorsqu'elle cesse d'être en situation de « soft handover ».

On notera que les figures ainsi décrites ne représentent que schématiquement une station mobile et un réseau de radiocommunications mobiles, dans la mesure nécessaire à la compréhension de la présente invention, et sans entrer dans le détail des procédés ou protocoles de transmission et de signalisation, qui peuvent par ailleurs faire appel à des principes classiques dans ces systèmes. En outre, la figure 2 ne correspond qu'à un exemple possible de répartition de fonctions entre les différentes entités ou équipements (tels que notamment Node B et RNC) formant ledit réseau de radiocommunications mobiles, et d'autres exemples seraient bien entendu possibles, sans sortir du cadre de la présente invention.

## Revendications

1. Procédé d'ajustement des instants d'émission sur l'interface radio entre réseau (UTRAN) et stations mobiles (UE) dans un système de radiocommunications mobiles, ce procédé comportant un contrôle, par le réseau (UTRAN), des ajustements effectués par les stations mobiles (UE), lesdits ajustements étant effectués par une station mobile (UE) en fonction de l'écart entre instants de réception et instants d'émission par la station mobile (UE).

2. Procédé selon la revendication 1, **caractérisé en ce que** ledit contrôle comporte une commande d'activation ou de désactivation desdits ajustements.

3. Procédé selon la revendication 1, **caractérisé en ce que** ledit contrôle comporte une commande d'amplitude maximale desdits ajustements.

4. Procédé selon la revendication 1, **caractérisé en ce que** ledit contrôle comporte une fréquence maximale pour lesdits ajustements.

5. Procédé selon la revendication 1, **caractérisé en ce que** ledit contrôle comporte une commande d'amplitude maximale et une commande de fréquence maximale desdits ajustements.

6. Procédé selon la revendication 5, **caractérisé en ce que** ladite commande d'amplitude maximale desdits ajustements inclut une amplitude nulle correspondant à une désactivation desdits ajustements.

7. Procédé selon l'une des revendications 1 à 6, **caractérisé en ce que** ledit contrôle est obtenu par diffusion d'informations de contrôle sur un canal de signalisation commun.

8. Procédé selon l'une des revendications 1 à 6, **caractérisé en ce que** ledit contrôle est obtenu par transmission d'informations de contrôle sur un canal de signalisation dédié.

9. Procédé selon la revendication 8, **caractérisé en ce que** lesdites informations de contrôle sont transmises sur un canal de signalisation dédié dans un message de « soft handover ».

10. Procédé selon l'une des revendications 1 à 9, **caractérisé en ce que** lesdits ajustements sont effectués de manière à maintenir le temps de réaction d'une boucle interne de contrôle de puissance inférieur à un temps de réaction nominal.

11. Réseau (UTRAN) de radiocommunications mobiles comportant des moyens pour transmettre aux stations mobiles (UE) des informations de contrôle d'ajustement des instants d'émission par les stations mobile (UE), lesdits ajustements étant effectués par une station mobile (UE) en fonction de l'écart entre instants de réception et instants d'émission par la station mobile (UE).

12. Station mobile (UE) comportant des moyens pour contrôler les ajustements de ses instants d'émission, en fonction d'informations de contrôle reçues du réseau (UTRAN), lesdits ajustements étant effectués par la station mobile (UE) en fonction de l'écart entre instants de réception et instants d'émission par la station mobile (UE).

## Claims

1. Method of adjusting times of transmission at the radio interface between a network (UTRAN) and mobile stations (UE) in a mobile radio system, which method includes control by the network (UTRAN) of adjustments effected by the mobile stations (UE), said adjustments being effected by a mobile station (UE) as a function of the difference between times of reception and times of transmission by the mobile station (UE).

2. Method according to claim 1, **characterised in that** said control uses a command for activating or deactivating said adjustments.

3. Method according to claim 1, **characterised in that** said control uses a maximum amplitude command in respect of said adjustments.

4. Method according to claim 1, **characterised in that** said control uses a maximum frequency command in respect of said adjustments.

5. Method according to claim 1, **characterised in that** said control uses a maximum amplitude command and a maximum frequency command in respect of said adjustments.

6. Method according to claim 5, **characterised in that** said maximum amplitude command in respect of said adjustments caters for a null amplitude corresponding to deactivation of said adjustments.

7. Method according to any of claims 1 to 6, **characterised in that** said control is obtained by broadcasting control information on a common signalling channel.

8. Method according to any of claims 1 to 6, **characterised in that** said control is obtained by transmitting control information over a dedicated signalling channel.

9. Method according to claim 8, **characterised in that** said control information is transmitted in a "soft handover" message on a dedicated signalling channel.

10. Method according to any one of claims 1 to 9, **characterised in that** said adjustments are effected so as to maintain the reaction time of an internal power control loop below a nominal reaction time.

11. Mobile radiocommunication network (UTRAN) including means for transmitting to the mobile stations (UE) control information for adjustment of the times of transmission by the mobile stations (UE), said adjustments being effected by a mobile station (UE) as a function of the difference between times of reception and times of transmission by the mobile station (UE).

12. Mobile station (UE) including means for controlling adjustment of its times of transmission as a function of control information received from the network (UTRAN), said adjustments being effected by the mobile station (UE) as a function of the difference between times of reception and times of transmission by the mobile station (UE).

## Patentansprüche

1. Verfahren zur Anpassung der über die Funkschnittstelle zwischen Netz (UTRAN) und Mobilstationen (UE) in einem Mobilfunk-Kommunikationssystem, wobei dieses Verfahren eine Kontrolle der von den Mobilstationen (UE) vorgenommenen Anpassungen durch das Netz (UTRAN) beinhaltet und die besagten Anpassungen, von einer Nobilstation (UE) in Abhängigkeit von der Abweichung zwischen Empfangszeitpunkten und Sendezeitpunkten von der Mobilstation (UE) vorgenommen wird.

2. Verfahren gemäß Anspruch 1, **dadurch gekennzeichnet, dass** die besagte Kontrolle einen Aktivierungs- oder Deaktivierungsbefehl für die besagten Anpassungen beinhaltet.

3. Verfahren gemäß Anspruch 1, **dadurch gekennzeichnet, dass** die besagte Kontrolle einen Befehl für eine maximale Amplitude der besagten Anpassungen beinhaltet.

4. Verfahren gemäß Anspruch 1, **dadurch gekennzeichnet, dass** die besagte Kontrolle eine maximale Frequenz der besagten Anpassungen beinhaltet.

5. Verfahren gemäß Anspruch 1, **dadurch gekennzeichnet, dass** die besagte Kontrolle einen Befehl für eine maximale Amplitude und einen Befehl für eine maximale Frequenz der besagten Anpassungen beinhaltet.

6. Verfahren gemäβ Anspruch 5, **dadurch gekennzeichnet, dass** der besagte Befehl für eine maximale Amplitude der besagten Anpassungen eine Amplitude von null beinhaltet, was einer Deaktivierung der besagten Anpassungen entspricht.

7. Verfahren gemäß einem der Ansprüche 1 bis 6, **dadurch gekennzeichnet, dass** die besagte Kontrolle durch Aussenden von Kontrollinformationen über einen, gemeinsamen Signalisierungskanal bewerkstelligt wird.

8. Verfahren gemäß einem der Ansprüche 1 bis 6, **dadurch gekennzeichnet, dass** die besagte Kontrolle durch Übertragung von Kontrollinformationen über einen eigens hierfür vorgesehenen Signalisierungskanal bewerkstelligt wird.

9. Verfahren gemäß Anspruch 8, **dadurch gekennzeichnet, dass** die besagten Kontrollinformationen über einen eigens hierfür vorgesehenen Signalisierungskanal in einer "Soft Handover" -Meldung übertragen werden.

10. Verfahren gemäß einem der Ansprüche 1 bis 9, **dadurch gekennzeichnet, dass** die besagten Anpassungen so vorgenommen werden, dass die Reaktionszeit einer internen Leistungsregelung kürzer ais eine Nennreaktionszeit gehalten wird.

11. Mobilfunk-Kommunikationsnetz (UTRAN), beinhaltend Mittel zum Übertragen von Kontrollinformationen zur Anpassung der Sendezeitpunkte der Mobilstationen (UE) an die. Mobilstationen (UE), wobei die besagten Anpassungen von einer Mobilstation (UE) in Abhängigkeit von der Abweichung zwischen Empfangszeitpunkten und Sendezeitpunkten der Mobilstation (UE) bewerkstelligt werden.

12. Mobilstation (UE), beinhaltend Mittel zum Kontrollieren der Anpassungen ihrer Sendezeitpunkte in Abhängigkeit von Kontrollinformationen, die vom Netz (UTRAN) empfangen wurden, wobei die besagten Anpassungen von der Mobilstation (UE) in Abhängigkeit von der Abweichung zwischen Empfangszeitpunkten und Sendezeitpunkten der Mobilisation (UE) bewerkstelligt werden.
